# FASCICULE DE BREVET EUROPEEN

(11) **EP 2 553 246 B1**
(45) Date de publication et mention de la délivrance du brevet: **29.08.2018**
(21) Numéro de dépôt: 11712641.7
(22) Date de dépôt: 25.02.2011
(51) Int. Cl.: F02D 41/02, F02D 41/40, F02D 35/02

(54) **PROCEDE DE PILOTAGE DE LA POST-INJECTION D'UN MOTEUR A COMBUSTION ET PROCEDE DE REGENERATION D'UN FILTRE A PARTICULES METTANT EN JEU UN TEL PROCEDE**
VERFAHREN ZUR STEUERUNG DER NACHINJEKTION EINES VERBRENNUNGSMOTORS UND VERFAHREN ZUR REGENERIERUNG EINES PARTIKELFILTERS MIT EINEM DERARTIGEN VERFAHREN
METHOD FOR CONTROLLING THE POST-INJECTION OF A COMBUSTION ENGINE AND METHOD FOR REGENERATING A PARTICLE FILTER USING SUCH A METHOD

(30) Priorité: 29.03.2010 FR 1052262
(43) Date de publication de la demande: 06.02.2013
(73) Titulaire: PSA Automobiles SA, 78300 Poissy (FR)
(72) Inventeur: LEFEBVRE, Damien, F-92800 Puteaux (FR)
(74) Mandataire: Renous Chan, Véronique
(86) Numéro de dépôt international: PCT/FR2011/050392
(87) Numéro de publication internationale: WO 2011/121199

(56) Documents cités:
- EP-A1- 1 380 742
- EP-A1- 1 905 991
- FR-A3- 2 914 945

## Description

L'invention porte sur le domaine du post-traitement des gaz d'échappement d'un moteur à combustion. Plus précisément, elle porte sur le contrôle d'un moteur à combustion pendant les phases de fonctionnement mettant en jeu des injections tardives dans le but d'introduire du carburant imbrûlé dans la ligne d'échappement du moteur, par exemple afin de régénérer un filtre à particules.

Comme d'autres dispositifs de post-traitement des gaz d'échappement, les filtres à particules communément employés sur des applications automobiles s'encrassent et doivent être périodiquement régénérés, c'est-à-dire échauffés fortement afin d'éliminer par oxydation les suies qui y sont piégées.

Le procédé objet de l'invention est décrit dans son application préférentielle à la régénération d'un filtre à particules, mais peut être appliqué à tout dispositif ou procédé de post-traitement nécessitant l'introduction d'hydrocarbures imbrûlés dans la ligne d'échappement d'un moteur.

Pour être régénéré, le filtre a besoin d'énergie thermique, et il faut alors typiquement élever la température des gaz entrant dans le filtre au moins à plus de 500°C.

Pour ce faire, le mode de fonctionnement du moteur est adapté pour obtenir des températures de gaz en sortie moteur élevées. On introduit également des hydrocarbures (par introduction de carburant) en sortie moteur. Ces hydrocarbures brûlent dans le catalyseur d'oxydation. Cette combustion augmente encore la température des gaz à l'échappement.

La combinaison de ces deux stratégies permet d'atteindre une température suffisante pour la régénération du filtre.

Un calcul de la quantité d'hydrocarbures qui doit arriver sur le catalyseur pour obtenir la température désirée en sortie du catalyseur est connu notamment au travers du document WO2009040488. Cependant dans cette demande PCT, on se base sur un système physique dans lequel le système d'injection du gazole à l'échappement est peu dispersé (utilisation d'un injecteur spécifique qui injecte directement dans la ligne d'échappement), et la quantité de carburant effectivement ainsi introduite est très précise.

Il est également connu, et moins coûteux, d'introduire le carburant nécessaire à la régénération du filtre en employant les injecteurs principaux du moteur, en réalisant des injections tardivement dans le cycle (post-injections), alors que la chambre de combustion présente des conditions de température et de pression qui ne vont pas immédiatement enflammer le carburant injecté.

Un tel fonctionnement est notamment connu de manière générique au travers du brevet EP1205647.

Cependant, dans ce cadre, la totalité de la quantité de carburant injecté ne parvient pas dans la ligne d'échappement (et donc au catalyseur), en raison de 2 phénomènes principaux. D'une part, une proportion du gazole brûle (bien que l'injection tardive survienne lorsque les conditions de pression et de température soient insuffisantes pour la combustion, il peut néanmoins en survenir une). D'autre part, il se produit un phénomène de dilution du gazole dans l'huile : les jets de gazole des post-injections frappent les parois du cylindre, ce qui crée une pellicule liquide pouvant passer sous la segmentation et se diluer dans l'huile de lubrification du moteur.

Ces phénomènes entraînent une mauvaise précision dans la quantité d'hydrocarbure qui arrive réellement sur le catalyseur. Cela pénalise fortement le comportement de la régulation des post-injections, et la précision de la température en sortie du catalyseur est dégradée.

La demande de brevet US2009082938 propose d'améliorer la précision de la quantité de post injection introduite à l'aide d'une cartographie sur le régime moteur et la quantité injectée, avec une correction de la pression atmosphérique. Cependant, tous les paramètres ne sont pas considérés, et notamment la dilution de l'huile n'est pas prise en compte, car une cartographie basée sur le seul régime moteur ne peut traduire les phénomènes influant sur le phénomène de dilution.

Or, une bonne maîtrise de la quantité d'hydrocarbures introduits est nécessaire, afin de maîtriser les températures en entrée du filtre à particules qui doivent être maintenues autour de la température visée, (typiquement 500 °C) durant les régénérations. Les variations de température autour de la température visée doivent être les plus contenues possibles et ce pour :
- ne pas endommager un dispositif de réduction catalytique sélective des oxydes d'azote (catalyseur « SCR »), si le circuit d'échappement en est équipé,
- ne pas entrainer des températures trop élevées dans le filtre, ce qui pourrait le détériorer,
- ne pas entrainer de températures trop élevées dans le catalyseur.

Le document EP1380742 divulgue un procédé de pilotage de la post-injection pour l'introduction de carburant dans une ligne d'échappement d'un moteur à combustion selon le préambule de la revendication 1.

La présente invention résout le problème ci-dessus en proposant un procédé permettant d'améliorer la précision de l'évaluation de la quantité d'hydrocarbures arrivant effectivement dans la ligne d'échappement et sur le catalyseur.

Pour ce faire, l'invention consiste en une stratégie pour compenser les pertes par dilution et par combustion d'une post injection pour un moteur durant les phases d'introduction dans la ligne d'échappement de carburant par injections tardives.

Plus précisément, l'invention porte sur un procédé de pilotage de la post-injection pour l'introduction de carburant dans une ligne d'échappement d'un moteur à combustion selon la revendication 1, dans lequel on définit, pour une post-injection, la quantité cible de carburant que l'on souhaite introduire dans la ligne d'échappement, dans lequel on détermine une consigne corrigée de post-injection permettant l'introduction effective dans la ligne d'échappement de cette quantité cible, en fonction des quantités de carburant post-injecté perdues par combustion et par dilution dans l'huile de lubrification du moteur, selon les conditions de la post-injection. La prise en compte de ces deux phénomènes dans le calcul de la consigne de post-injection à appliquer offre une grande maîtrise de la quantité de carburant arrivant effectivement dans la ligne d'échappement. Les avantages sont multiples : une bonne maîtrise de la consommation de carburant liée à la post-injection, un bon contrôle de la température dans la ligne l'échappement, la possibilité de réduire la durée de régénération d'un filtre à particule présent dans la ligne d'échappement, ou de réduire la taille du catalyseur d'oxydation (qui a une quantité d'hydrocarbures à traiter parfaitement connue et maîtrisée).

De préférence, on détermine la consigne corrigée en tenant compte également d'une fonction prédéfinie de l'imprécision d'injection du système d'injection employé. La connaissance et la prise en compte de l'imprécision du système d'injection, c'est-à-dire de la différence entre l'ordre d'injection et la quantité de carburant réellement injecté, augmente encore la précision de l'injection et donc l'efficacité d'un procédé selon l'invention.

On détermine la consigne corrigée de post-injection en divisant la quantité cible de carburant par le ratio, déterminé dans une cartographie préétablie dépendante des conditions de post-injection, entre une consigne et la quantité de carburant imbrûlé sortant effectivement de la chambre de combustion pour cette consigne. C'est une solution technique simple de mise en oeuvre de l'invention. La cartographie peut être obtenue par des essais menés sur le type de moteur considéré dans diverses conditions de fonctionnement, et extrapolation sur l'ensemble du champ de fonctionnement du moteur des résultats ainsi obtenus.

Les conditions de la post-injection sont définies par un ou plusieurs paramètres parmi : le phasage de l'injection dans le cycle moteur, la température dans la chambre au moment de l'injection, la pression en entrée de l'injecteur au début de l'injection, la quantité de carburant injectée lors de la dernière injection principale précédant la post-injection considérée. Ce sont les paramètres qui vont le plus influer sur la quantité de carburant post-injecté qui sera brûlé ou qui passera sous la segmentation du moteur pour être dilué dans l'huile de lubrification.

Dans une variante de l'invention, si la consigne corrigée est inférieure à un seuil prédéfini, on ne réalise pas la post-injection correspondante, et on ajoute à la quantité cible de carburant ainsi non post-injecté à la quantité cible suivante. Cela permet de réduire la part d'erreur liée à l'imprécision du système d'injection. Le seuil prédéfini est choisi en fonction des caractéristiques du système d'injection employé.

L'invention porte également sur régénération d'un filtre à particules par post-injection de carburant mettant en jeu un procédé de pilotage de la post-injection selon l'invention, pour la détermination des consignes de post-injection. En effet, la régénération d'un filtre à particules nécessite une augmentation importante mais maîtrisée de la température dans la ligne d'échappement. Cela constitue l'application privilégiée d'un procédé de pilotage de la post-injection conforme à l'invention.

La figure 1 présente schématiquement les différentes imprécisions dans la post-injection, ainsi que le mode de correction qui y est apporté.

La figure 2 présente un synoptique d'un procédé conforme à une variante de l'invention.

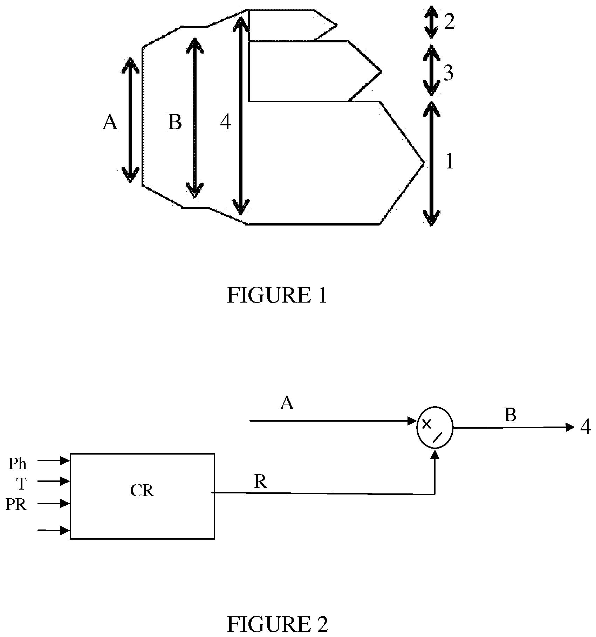

La figure 1 présente schématiquement les différentes imprécisions dans la post-injection, ainsi que le mode de correction qui y est apporté. Ainsi, on vise à l'arrivée effective d'une quantité cible 1 de carburant sur un catalyseur présent dans la ligne d'échappement.

Pour le pilotage de la post-injection, on part donc d'une quantité cible 1 de carburant que l'on souhaite introduire à l'échappement, à laquelle correspond une consigne de base A de post-injection. L'invention consiste à déterminer une consigne corrigée B, qui permette l'arrivée effective de la quantité cible 1 de carburant sur le catalyseur. Ainsi, la correction apportée entre la consigne de base A et la consigne corrigée B, prend en considération la perte de carburant post-injecté lié à la combustion d'une part du carburant post-injecté, représentant une quantité de carburant brûlé 2 avant d'atteindre le catalyseur, et à la dilution de l'huile par une part du carburant post-injecté, représentant une quantité de carburant dilué 3. Selon la variante de l'invention considérée, la correction prend également en compte l'imprécision du système d'injection, qui se traduit, pour une consigne d'injection corrigée B, par l'injection d'une quantité de carburant effectivement injectée 4 sensiblement différente de la consigne.

L'imprécision du système d'injection traduit la différence entre la quantité de carburant qu'on ordonne d'injecter au système d'injection, et l'injection qui est effectivement réalisée. Cette imprécision, propre au système d'injection employé, peut être traduite sous forme d'une fonction de la quantité à injecter, fonction définie empiriquement par une campagne d'essais sur le système d'injection employé.

La figure 2 présente le synoptique d'un mode de réalisation de l'invention.

Une consigne de base A correspondant à l'ordre d'émission d'une quantité cible 1 de carburant est corrigée afin d'obtenir une consigne corrigée B, correspondant à une quantité de carburant effectivement injectée 4, qui, consécutivement aux pertes liées à la combustion d'une partie du carburant post-injecté et à la dilution de l'huile par une autre partie du carburant post-injecté, permet l'arrivée effective dans la ligne d'échappement et sur un catalyseur positionné dans cette ligne de la quantité cible 1 de carburant.

Dans la variante de l'invention ici représentée, on détermine les conditions de post injection, à savoir le phasage de l'injection Ph dans le cycle moteur, la température dans la chambre de combustion T où l'on injecte, au moment de l'injection, et la pression en entrée de l'injecteur PR au début de l'injection.

Selon une autre variante de l'invention non représentée, les conditions de post-injection comprennent en outre la quantité de carburant injectée lors de l'injection principale précédente.

Selon d'autres variantes de l'invention, seuls un ou plusieurs des paramètres précédemment cités sont pris en compte pour définir les conditions de la post-injection.

D'autres paramètres dont on peut déterminer une équivalence par rapport aux paramètres précédemment cités peuvent également être considérés (température dans le collecteur d'échappement du moteur au lieu de la température dans la chambre, pression dans le rail d'injection, etc).

Les conditions d'injections permettent de déterminer, dans une cartographie CR prédéfinie, le ratio R entre une consigne de post-injection réalisée dans ces conditions d'injection et la quantité d'hydrocarbures imbrûlés sortant effectivement de la chambre de combustion pour cette consigne. Ce ratio constitue ce que l'on peut appeler le « rendement de post-injection ».

La consigne de base est alors corrigée en tenant compte de ce ratio R ; en pratique on divise la consigne de base par le ratio R pour obtenir la consigne corrigée B.

La réalisation d'une cartographie adaptée à la mise en oeuvre de l'invention est préférentiellement un travail empirique, basé sur de nombreux essais statistiques réalisés sur un moteur du type sur lequel on souhaite appliquer un procédé selon l'invention.

Des extrapolations du ratio peuvent être réalisées pour toutes conditions de post-injection. Des valeurs seuil connues peuvent servir de référence. Typiquement, le ratio ou rendement de post-injection est proche d'une valeur de 1 lorsque le phasage de la post-injection est éloigné de celui de l'injection principale et que la température de la chambre de combustion est élevée, ce qui favorise une meilleure vaporisation du carburant post-injecté (ce qui limite le phénomène de dilution) tout en limitant le risque de combustion du carburant post-injecté. A contrario, le rendement est généralement autour de 0.5 lorsque le moteur est peu chargé (sur les phases de ralenti par exemple).

On notera que le procédé développé dans l'invention est compatible avec d'autres stratégies connues par ailleurs, notamment pour limiter l'imprécision d'injection. En effet, plus les quantités devant être post-injectées sont faibles, plus l'imprécision sur la quantité effectivement injectée est grande. Pour palier à ce problème, on peut reporter la quantité à post-injecter dans un premier cylindre sur la post-injection suivante, par exemple dans un deuxième cylindre du moteur, en additionnant cette quantité à celle devant être post-injectée dans le deuxième cylindre. Une telle stratégie est employée dans une variante de l'invention lorsque la consigne de post-injection est inférieure à un seuil prédéfini (c'est-à-dire qu'elle correspond à une quantité de carburant trop faible pour être injectée de manière précise par le système d'injection) : la quantité cible correspondant à la post-injection considérée est alors ajoutée à la quantité cible de la post-injection suivante.

La solution du report de débits est possible notamment lorsque la post-injection est réalisée à chaque point mort haut. Ceux-ci sont suffisamment rapprochés pour que, du point de vue du catalyseur, il n'y ait pas de conséquences. Ainsi le débit moyen injecté respecte bien la consigne tout en assurant que les débits unitaires sont supérieurs à une limite basse d'injection permettant d'assurer une précision suffisante des quantités injectées.

Le procédé développé dans l'invention permet ainsi une meilleure connaissance de la quantité de carburant qui est effectivement introduite à l'échappement d'un moteur à combustion par post-injection. Cette connaissance permet par exemple d'assurer une régénération efficace d'un filtre à particules, tout en diminuant les occurrences de régénérations dites sévères, c'est-à-dire pouvant endommager le filtre. En optimisant les post-injections, il est possible de mieux maîtriser le phénomène de dilution de l'huile de lubrification du moteur, en ce qu'on peut par exemple réduire la durée d'une régénération d'un filtre à particules.

Enfin, en ce qu'il propose de dissocier les effets physiques influençant la précision de la post-injection, le procédé offre une bonne facilité de mise au point.

## Revendications

1. Procédé de pilotage de la post-injection pour l'introduction de carburant dans une ligne d'échappement d'un moteur à combustion, dans lequel on définit, pour une post-injection, la quantité cible (1) de carburant que l'on souhaite introduire dans la ligne d'échappement, on détermine une consigne corrigée (B) de post-injection permettant l'introduction effective dans la ligne d'échappement de cette quantité cible, en fonction des quantités de carburant post-injecté perdues par combustion (2) et par dilution (3) dans l'huile de lubrification du moteur selon les conditions de la post-injection, en divisant la quantité cible (1) de carburant par le ratio entre une consigne et la quantité de carburant imbrûlé sortant effectivement de la chambre de combustion pour cette consigne, le procédé étant **caractérisé en ce que** le ratio est déterminé dans une cartographie (CR) préétablie dépendante des conditions de post-injection, lesdites conditions de post-injection étant définies par un ou plusieurs paramètres parmi : le phasage de l'injection (Ph) dans le cycle moteur, la température dans la chambre (T) au moment de l'injection, la pression en entrée de l'injecteur (PR) au début de l'injection, la quantité de carburant injectée lors de la dernière injection principale précédant la post-injection considérée.

2. Procédé selon la revendication 1, **caractérisé en ce qu'**on détermine la consigne corrigée (B) en tenant compte également d'une fonction prédéfinie de l'imprécision d'injection du système d'injection employé.

3. Procédé selon l'une quelconque des revendications précédentes, **caractérisé en ce que** si la consigne corrigée (B) est inférieure à un seuil prédéfini, on ne réalise pas la post-injection correspondante, et on ajoute à la quantité cible de carburant ainsi non post-injecté à la quantité cible suivante.

4. Procédé de régénération d'un filtre à particules par post-injection de carburant, **caractérisé en ce qu'**il met en jeu un procédé selon l'une quelconque des revendications précédentes pour la détermination des consignes de post-injection.

## Patentansprüche

1. Verfahren zur Steuerung der Nachinjektion zum Einführen von Kraftstoff in einen Abgasstrang eines Verbrennungsmotors, bei dem für eine Nachinjektion die Kraftstoffzielmenge (1), die in den Abgasstrang eingeführt werden soll, definiert wird, ein korrigierter Sollwert (B) zur Nachinjektion, der das effektive Einführen dieser Zielmenge in den Abgasstrang erlaubt, in Abhängigkeit von den durch Verbrennung (2) oder durch Verdünnung (3) in dem Schmieröl des Motors gemäß den Bedingungen der Nachinjektion verloren gegangenen nacheingespritzten Kraftstoffmengen bestimmt wird, indem die Kraftstoffzielmenge (1) durch das Verhältnis zwischen einem Sollwert und der unverbrannten Kraftstoffmenge, die effektiv aus der Brennkammer für diesen Sollwert austritt, dividiert wird, Verfahren **dadurch gekennzeichnet, dass** das Verhältnis in einer vorab ermittelten Kartographie (CR), die von den Nachinjektionsbedingungen abhängt, bestimmt wird, wobei die Nachinjektionsbedingungen von einem oder mehreren Parametern aus den folgenden definiert sind: die Injektionsphasenlage (Ph) in dem Motorzyklus, die Temperatur in der Kammer (T) im Augenblick der Injektion, der Druck am Einspritzdüseneingang (PR) am Anfang der Injektion, die Kraftstoffmenge, die bei der letzten Hauptinjektion, die der betreffenden Nachinjektion vorausgeht, eingespritzt wird.

2. Verfahren nach Anspruch 1, **dadurch gekennzeichnet, dass** der korrigierte Sollwert (B) auch unter Berücksichtigung einer vorab definierten Funktion der Injektionsungenauigkeit des verwendeten Injektionssystems bestimmt wird.

3. Verfahren nach einem der vorhergehenden Ansprüche, **dadurch gekennzeichnet, dass**, wenn der korrigierte Sollwert (B) kleiner ist als ein vordefinierter Schwellenwert, die entsprechende Nachinjektion nicht ausgeführt wird, und zu der Kraftstoffzielmenge, die daher nicht eingespritzt wurde, die darauffolgende Zielmenge hinzugefügt wird.

4. Regenerierungsverfahren eines Partikelfilters durch Kraftstoffnachinjektion, **dadurch gekennzeichnet, dass** es ein Verfahren nach einem der vorhergehenden Ansprüche zum Bestimmen der Nachinjektionsollwerte heranzieht.

## Claims

1. A method for controlling the post-injection for introducing fuel into an exhaust line of a combustion engine, in which, for a post-injection, the target quantity (1) of fuel which one wishes to introduce into the exhaust line is defined, a post-injection corrected setpoint (B) is determined, permitting the effective introduction of this target quantity into the exhaust line, as a function of the quantities of post-injected fuel lost by combustion (2) and by dilution (3) in the lubricating oil of the engine according to the conditions of the post-injection, by dividing the target quantity (1) of fuel by the ratio between a setpoint and the quantity of unburnt fuel exiting effectively the combustion chamber for this setpoint, the method being **characterized in that** the ratio is determined in a pre-established cartography (CR) dependent on the post-injection conditions, said post-injection conditions being defined by one or more parameters from: the phasing of the injection (Ph) in the engine cycle, the temperature in the chamber (T) at the moment of injection, the pressure at the inlet of the injector (PR) at the start of the injection, the quantity of fuel injected during the last main injection preceding the post-injection concerned.

2. The method according to claim 1, **characterized in that** the corrected setpoint (B) is determined taking into account, also, a predefined function of the imprecision of injection of the injection system which is employed.

3. The method according to any one of the preceding claims, **characterized in that** if the corrected setpoint (B) is lower than a predefined threshold, the corresponding post-injection is not executed, and there is added to the target quantity of fuel thus non- post-injected to the following target quantity.

4. A method of regeneration of a particle filter by post-injection of fuel, **characterized in that** it brings into play a method according to any one of the preceding claims for the determining of post-injection setpoints.
